# DEMANDE DE BREVET EUROPEEN

(11) **EP 4 723 409 A2**
(43) Date de publication de la demande: **08.04.2026**
(21) Numéro de dépôt: 26158805.7
(22) Date de dépôt: 24.03.2023
(51) Int. Cl.: H02G 11/02

(54) **DISPOSITIF DE STOCKAGE, TRANSPORT ET INSTALLATION DE FILS ET CÂBLES ÉLECTRIQUES**

(30) Priorité: 19.04.2022 FR 2203599
(62) Demande divisionnaire de: 23164197.8
(71) Demandeur: Nexans, 92400 Courbevoie (FR)
(72) Inventeur: DEMULE, Christophe, 92400 Courbevoie (FR); BRIN, Julien, 92400 Courbevoie (FR); SIMON, Thibaud, 92400 Courbevoie (FR); DELWAL, Fabien, 92400 Courbevoie (FR)
(74) Mandataire: Cabinet Boettcher

(57) **Abrégé**

Ce dispositif (10) de stockage, transport et installation de fils ou câbles électriques, comporte : une première plaque (12) en matière plastique ; une seconde plaque (14) en matière plastique parallèle à la première plaque (12) ; quatre tubes (16) métalliques reliant entre elles les première et seconde plaques (12, 14) ; au moins un cylindre (18) sur lequel est enroulé un fil ou câble électrique, le cylindre (18) étant monté sur la première plaque (12) et sur la seconde plaque (14) et étant mobile en rotation autour de son axe de révolution ; et au moins une poignée (20) de transport.

## Description

La présente invention se rapporte à un dispositif de stockage, transport et installation de fils et câbles électriques.

L'invention appartient au domaine des équipements pour fils électriques et câbles électriques dans des secteurs variés, tels le bâtiment ou l'industrie.

Lorsqu'un électricien installe des fils ou des câbles électriques, il utilise généralement des bobines de fil ou câble emballées dans des feuilles de plastique.

Ce type d'emballage comporte un certain nombre d'inconvénients.

Tout d'abord, le fil ou câble étant déroulé à partir de l'intérieur de la bobine, il subit un entortillement progressif qui rend l'installation plus longue et augmente d'autant le coût de celle-ci.

En outre, une fois la phase d'installation achevée et les emballages ne contenant plus de fil ou câble, l'installateur doit gérer le processus de recyclage du plastique des emballages, ce qui est coûteux en temps et en argent.

Par ailleurs, la voiture ou camionnette de l'installateur est généralement petite et le stockage des produits pose problème du fait de leur encombrement. A titre d'exemple, une bobine classique de 100 mètres de fil électrique occupe en moyenne un volume de 2 litres et les dispositifs existants de stockage de bobines présentent le plus souvent des formes peu pratiques pour le transport simultané de multiples dispositifs, que ce soit dans la voiture ou camionnette, ou à la main.

La présente invention a pour but de remédier aux inconvénients précités de l'art antérieur.

Dans ce but, la présente invention propose un dispositif de stockage, transport et installation de fils ou câbles électriques, remarquable en ce qu'il comporte :
- une première plaque;
- une seconde plaque parallèle à la première plaque ;
- des tubes reliant entre elles les première et seconde plaques ;
- des cylindres sur chacun desquels est enroulé un fil ou câble électrique, lesdits cylindres étant montés sur la première plaque et sur la seconde plaque et chaque cylindre étant mobile en rotation autour de son axe de révolution ; et
- au moins une poignée de transport.

Ainsi, la présente invention couvre, sous une forme robuste, compacte et très simple d'utilisation, l'ensemble des fonctionnalités de stockage, de transport et d'installation de fils ou câbles électriques.

Elle offre un gain de temps lors de l'installation du fait de la suppression de l'entortillement du fil ou câble et présente une empreinte environnementale réduite grâce à l'absence d'emballage en plastique des bobines et à la possibilité de réutiliser le dispositif avec de nouvelles bobines une fois que celles qui sont montées dans celui-ci sont vides.

Elle permet en outre de diminuer le volume requis pour le stockage des bobines.

Par ailleurs, le fil ou câble est aisément accessible en permanence sachant qu'il s'agit d'un dispositif ouvert.

Dans un mode particulier de réalisation, les tubes métalliques sont en aluminium.

Cela permet d'obtenir un dispositif tout à la fois léger et robuste.

Dans un mode particulier de réalisation, les première et seconde plaques comportent chacune au moins une protubérance hémisphérique s'emboîtant à chaque extrémité d'au moins un cylindre, l'au moins un cylindre étant creux, présentant un diamètre intérieur égal au diamètre des protubérances hémisphériques et étant mobile en rotation autour des protubérances hémisphériques.

Ce mécanisme d'emboîtement sur les protubérances permet un montage et un démontage facile et rapide des bobines.

Dans un mode particulier de réalisation, l'au moins une poignée de transport est formée par une ouverture dans la première et/ou seconde plaque.

Cela permet de doter le dispositif d'un outil de transport sans en augmenter l'encombrement ni la masse.

Dans un mode particulier de réalisation, le dispositif comporte en outre au moins une sangle de transport passant par cette ouverture.

Ainsi, l'installateur peut aisément transporter simultanément plus d'un dispositif.

Dans un mode particulier de réalisation, les première et seconde plaques présentent une forme globalement carrée, le dispositif comporte trois cylindres respectivement montés dans trois angles de cette forme globalement carrée et la poignée est unique et prévue dans le quatrième angle de cette forme globalement carrée.

Cela confère au dispositif une forme d'ensemble sensiblement cubique qui est particulièrement compacte.

Dans un autre mode particulier de réalisation, les première et seconde plaques présentent une forme globalement rectangulaire, le dispositif comporte au moins trois cylindres montés de façon alignée le long des côtés de plus grande longueur de cette forme globalement rectangulaire et l'au moins une poignée est prévue d'au moins un côté de l'ensemble formé par les au moins trois cylindres.

Ainsi, l'installateur a une visibilité immédiate sur toutes les bobines de fil ou câble d'un seul coup d'œil.

Dans un mode particulier de réalisation, le dispositif comporte en outre, pour chacun de l'au moins un cylindre, une tige équipée d'un œillet guide-fil disposée sur un des tubes métalliques.

Le passage du fil ou câble à travers l'œillet guide-fil lors de son déroulement permet de rassembler les fils ou câbles électriques afin de faciliter leur installation et pour les couper plus facilement également.

Dans un mode particulier de réalisation, le dispositif comporte en outre une clé adaptée à s'insérer dans un orifice prévu dans la face plane de chacune des protubérances hémisphériques pour rembobiner l'au moins un cylindre.

Cela permet de faciliter le rembobinage du fil ou câble électrique.

Dans un mode particulier de réalisation, les première et seconde plaques présentent une forme adaptée à l'empilement horizontal et vertical de plusieurs exemplaires du dispositif.

Cela réduit d'autant le volume nécessaire au stockage de multiples bobines.

### Brève description des dessins

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :
- [ Fig. 1 ] est une représentation schématique d'un dispositif conforme à la présente invention, dans un mode particulier de réalisation ;
- [ Fig. 2 ] est une représentation schématique d'un dispositif conforme à la présente invention, dans un autre mode particulier de réalisation ;
- [ Fig. 3 ] est une vue schématique d'un empilement de deux dispositifs conformes à la présente invention, dans un mode particulier de réalisation ; et
- [ Fig. 4 ] est une vue schématique partielle du dispositif conforme à la présente invention montrant des détails de réalisation.

### Description de mode(s) de réalisation

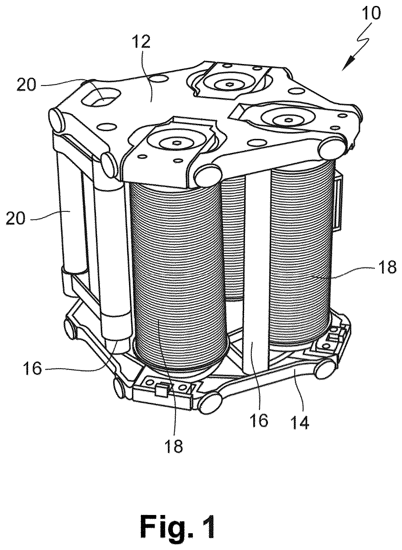

Comme le montre la figure 1 , dans un mode particulier de réalisation, un dispositif 10 de stockage, transport et installation de fils ou câbles électriques conforme à la présente invention comporte une première plaque 12 en matière plastique, de préférence durable et une seconde plaque 14 également en matière plastique, de préférence durable.

Les première et seconde plaques 12, 14 sont parallèles.

En outre, le dispositif 10 comporte quatre tubes 16 métalliques reliant entre elles les première et seconde plaques 12, 14. A titre d'exemple nullement limitatif, chacun des tubes 16 peut être fixé dans les première et seconde plaques 12, 14 au moyen d'éléments de fixation tels que vis, boulons ou écrous venant s'insérer dans des orifices prévus à cet effet dans les première et seconde plaques 12, 14.

A titre d'exemple non limitatif, les tubes 16 métalliques peuvent être réalisés en aluminium.

Le dispositif 10 comporte en outre des cylindres 18 sur chaque desquels est enroulé un fil ou câble électrique. Les cylindres 18 sont montés sur la première plaque 12 et sur la seconde plaque 14. Chaque cylindre 18 est mobile en rotation autour de son axe de révolution.

Le dispositif 10 comporte également au moins une poignée de transport 20.

Cette poignée 20 peut par exemple être prévue directement dans la première plaque 12 ou dans la seconde plaque 14, ou dans les deux plaques 12 et 14.

Cette poignée 20 peut par exemple être formée par une ouverture ménagée dans la plaque concernée, comme dans le mode particulier de réalisation de la figure 1 .

De façon optionnelle, le dispositif 10 peut comporter en outre au moins une sangle de transport (non représentée) qui peut passer par cette ouverture.

En variante, la poignée 20 peut être accrochée à l'un des tubes 16 métalliques, ou plusieurs poignées 20 peuvent être accrochées aux tubes 16 métalliques. Une telle variante est également illustrée sur la figure 1 .

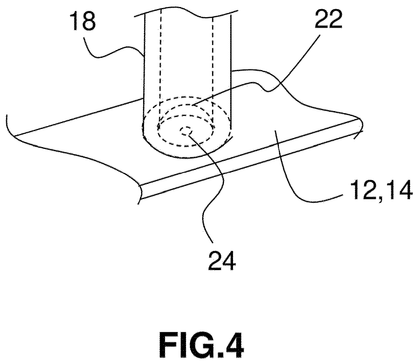

Dans un mode particulier de réalisation du dispositif 10 illustré partiellement sur la figure 4 , chaque cylindre 18 peut être fixé sur les plaques 12 et 14 au moyen d'une protubérance 22 de forme hémisphérique présente sur chacune des deux plaques 12 et 14. Dans ce mode de réalisation, le cylindre 18 est creux, présente un diamètre intérieur égal au diamètre des protubérances 22, vient ainsi s'emboîter sur ces protubérances 22 et est mobile en rotation autour de celles-ci.

Dans le mode particulier de réalisation de la figure 1, les première et seconde plaques 12, 14 présentent une forme globalement carrée et le dispositif 10 comporte trois cylindres 18 respectivement montés dans trois angles de cette forme globalement carrée, le dispositif 10 présentant dans ce mode de réalisation des poignées 20 prévues dans le quatrième angle de cette forme globalement carrée, dont une poignée 20 ménagée directement dans la première plaque 12 et une poignée 20 accrochée à l'un des tubes métalliques 16. Autrement dit, les trois cylindres 18 sont disposés de façon triangulaire sur les plaques carrées 12, 14.

A titre d'exemple nullement limitatif, les plaques 12 et 14 du mode de réalisation de la figure 1 peuvent présenter une épaisseur de 2 cm et une longueur de côté de 260 mm et les tubes 16 métalliques peuvent présenter une longueur de 260 mm. L'ensemble du dispositif 10 du mode de réalisation de la figure 1 est ainsi sensiblement cubique.

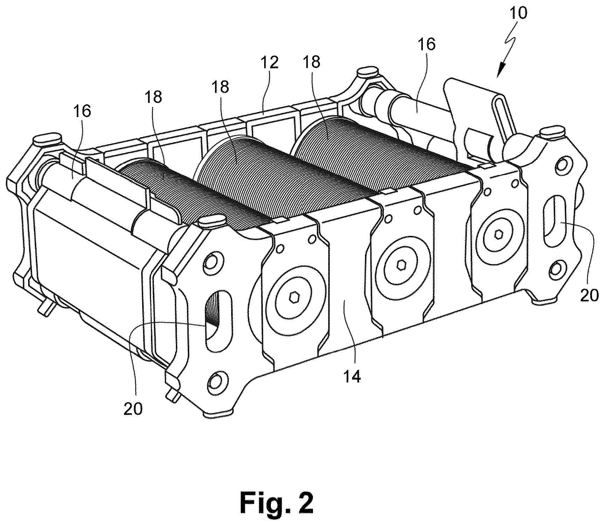

La figure 2 montre un autre mode particulier de réalisation du dispositif 10, dans lequel les première et seconde plaques 12, 14 présentent une forme globalement rectangulaire. Dans cet autre mode de réalisation, le dispositif 10 comporte au moins trois cylindres 18 montés de façon alignée le long des côtés de plus grande longueur de la forme globalement rectangulaire. Dans cet autre mode de réalisation, on peut prévoir, sur la première et/ou sur la seconde plaque 12, 14, soit une seule poignée 20 d'un côté de l'ensemble formé par les cylindres 18 alignés, soit deux poignées 20 ménagées de part et d'autre de cet ensemble (comme représenté).

A titre d'exemple nullement limitatif, les plaques 12 et 14 du mode de réalisation de la figure 2 peuvent présenter une épaisseur de 2 cm, une longueur de 400 mm et une largeur de 260 mm et les tubes 16 métalliques peuvent présenter une longueur de 260 mm.

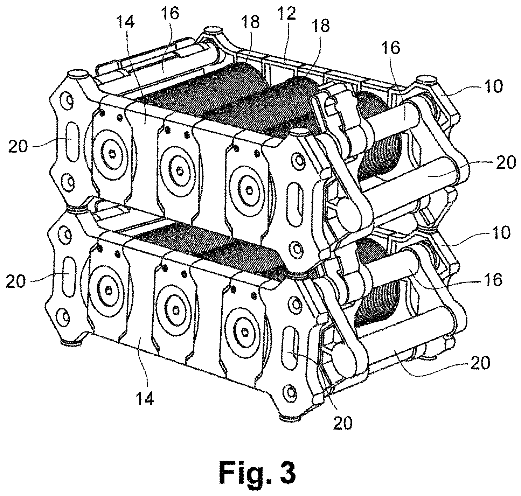

De façon optionnelle, les plaques 12 et 14 peuvent présenter une forme adaptée à l'empilement horizontal et vertical de plusieurs exemplaires du dispositif 10. Comme le montrent les figures 1 et 2, cette forme adaptée peut par exemple inclure de petits côtés additionnels prévus à chaque angle de la forme globalement carrée ou de la forme globalement rectangulaire des plaques 12 et 14. La figure 3 illustre un exemple d'empilement horizontal de deux exemplaires du dispositif 10 conforme au mode particulier de réalisation de la figure 2.

De façon optionnelle, le dispositif 10 peut comporter en outre un système de guide-fil (non représenté) disposé sur l'un des tubes 16 métalliques et consistant par exemple en une tige fixée sur le tube 16 métallique, cette tige présentant à son extrémité un œillet guide-fil.

Comme le montre la figure 4, de façon optionnelle, pour permettre un rembobinage aisé des cylindres 18, le dispositif 10 peut comporter en outre un orifice 24 dans la face plane de chacune des protubérances 22 hémisphériques et une clé (non représentée) de forme complémentaire à celle de l'orifice 24, adaptée à s'y insérer pour faire tourner le cylindre 18 et ainsi rembobiner le fil ou câble électrique enroulé autour de ce cylindre 18. A titre d'exemple nullement limitatif, l'orifice 24 et la section transversale de la clé peuvent présenter une forme hexagonale.

De façon optionnelle, le dispositif 10 peut en outre comporter, sur le panneau supérieur 14 et/ou sur le panneau de base 12, au moins un œillet accroche-fil 50 adapté à recevoir une extrémité du fil ou câble enroulé sur l'un des cylindres 18.

## Revendications

1. Dispositif (10) de stockage, transport et installation de fils ou câbles électriques, **caractérisé en ce qu'**il comporte :
une première plaque (12);
une seconde plaque (14) parallèle à ladite première plaque (12) ;
des tubes (16) reliant entre elles lesdites première et seconde plaques (12, 14) ;
des cylindres (18) sur chacun desquels est enroulé un fil ou câble électrique, lesdits cylindres (18) étant montés sur ladite première plaque (12) et sur ladite seconde plaque (14) et chaque cylindre étant mobile en rotation autour de son axe de révolution ; et
au moins une poignée (20) de transport.

2. Dispositif (10) selon la revendication 1, **caractérisé en ce que** lesdites première et seconde plaques (12, 14) comportent chacune au moins une protubérance (22) hémisphérique s'emboîtant à chaque extrémité d'au moins un cylindre (18).

3. Dispositif (10) selon la revendication 2, dans lequel ledit au moins un cylindre (18) est creux, présente un diamètre intérieur égal au diamètre desdites protubérances (22) hémisphériques et est mobile en rotation autour desdites protubérances (22) hémisphériques.

4. Dispositif (10) selon la revendication 1, 2 ou 3, **caractérisé en ce que** ladite au moins une poignée (20) de transport est formée par une ouverture dans ladite première et/ou seconde plaque (12, 14).

5. Dispositif (10) selon la revendication 4, **caractérisé en ce qu'** il comporte en outre au moins une sangle de transport passant par ladite ouverture.

6. Dispositif (10) selon l'une quelconque des revendications précédentes, **caractérisé en ce que** lesdites première et seconde plaques (12, 14) présentent une forme globalement carrée, **en ce qu'** il comporte trois cylindres (18) respectivement montés dans trois angles de ladite forme globalement carrée et **en ce que** ladite poignée (20) est unique et prévue dans le quatrième angle de ladite forme globalement carrée.

7. Dispositif (10) selon l'une quelconque des revendications 1 à 5, **caractérisé en ce que** lesdites première et seconde plaques (12, 14) présentent une forme globalement rectangulaire, **en ce qu'** il comporte au moins trois cylindres (18) montés de façon alignée le long des côtés de plus grande longueur de ladite forme globalement rectangulaire et **en ce que** ladite au moins une poignée (20) est prévue d'au moins un côté de l'ensemble formé par lesdits au moins trois cylindres (18).

8. Dispositif (10) selon l'une quelconque des revendications précédentes, **caractérisé en ce qu'** il comporte en outre, pour au moins un cylindre (18), une tige équipée d'un œillet guide-fil disposée sur l'un desdits tubes (16) métalliques.

9. Dispositif (10) selon l'une quelconque des revendications précédentes, **caractérisé en ce qu'** il comporte en outre une clé adaptée à s'insérer dans un orifice (24) prévu dans la face plane d'au moins une des protubérances (22) hémisphériques pour rembobiner ledit au moins un cylindre (18).

10. Dispositif (10) selon l'une quelconque des revendications précédentes, **caractérisé en ce que** lesdites première et seconde plaques (12, 14) présentent une forme adaptée à l'empilement horizontal et vertical de plusieurs exemplaires dudit dispositif (10).

11. Dispositif (10) selon l'une quelconque des revendications précédentes, dans lequel le dispositif est un dispositif ouvert de sorte de sorte à permettre une visibilité immédiate sur toutes les bobines de fil ou câble d'un seul coup d'œil.

12. Dispositif (10) selon l'une quelconque des revendications précédentes, dans lequel chaque cylindre (18) est fixé sur les plaques (12) et (14) au moyen d'une protubérance (22) de forme hémisphérique présente sur chacune des deux plaques (12) et (14) .
